# EUROPÄISCHE PATENTSCHRIFT

(11) **EP 2 680 973 B1**
(45) Veröffentlichungstag und Bekanntmachung des Hinweises auf die Patenterteilung: **22.04.2015**
(21) Anmeldenummer: 12735775.4
(22) Anmeldetag: 30.05.2012
(51) Int. Cl.: G01N 35/04, B01L 9/06, G01N 35/02

(54) **VORRICHTUNG ZUM POSITIONIEREN VON GEFÄSSEN UND SEINE VERWENDUNG**
DEVICE FOR POSITIONING A SAMPLE TUBE AND USE OF SAME
DISPOSITIF DE POSITIONEMENT DES FLACON D'ECHANTILLON ET SON UTILISATION

(43) Veröffentlichungstag der Anmeldung: 08.01.2014
(73) Patentinhaber: Eppendorf AG, 22339 Hamburg (DE)
(72) Erfinder: KNOFE, Helmut, 22844 Norderstedt (DE); KROOG, Jens-Peter, 22927 Grosshansforf (DE); LUCKE, Judith, 22765 Hamburg (DE)
(74) Vertreter: Hauck Patentanwaltspartnerschaft mbB
(86) Internationale Anmeldenummer: PCT/EP2012/002273
(87) Internationale Veröffentlichungsnummer: WO 2013/178235

(56) Entgegenhaltungen:
- EP-A1- 1 767 949
- EP-A2- 1 278 066
- WO-A2-2010/059569
- US-A- 4 276 258
- US-A1- 2007 189 924

## Beschreibung

Die Erfindung bezieht sich auf eine Vorrichtung zum Positionieren von Gefäßen. Ferner bezieht sich die Erfindung auf eine Verwendung der Vorrichtung zum Positionieren von Gefäßen.

Bei der Vorbereitung der PCR (Polymerase Chain Reaction) wird zunächst Nukleinsäure aufgereinigt. Die Aufreinigung von Nukleinsäure kann mit Hilfe von Magnetpartikeln erfolgen. Hierbei wird wiederholt Nukleinsäure in speziellen Reagenzien gelöst, an den Magnetpartikeln angelagert und von den Reagenzien getrennt. Bekannt ist, die Aufreinigung mit Hilfe von Magnetpartikeln mittels Laborautomaten durchzuführen. Hierbei werden die aufzureinigenden Proben, die benötigten Reagenzien und die Magnetpartikel in Gefäßen auf einer Arbeitsfläche des Laborautomaten bereitgestellt. Aus den Gefäßen werden sie mittels einer Pipette des Laborautomaten entnommen, in Gefäßen gemischt und einem Magnetfeld unterworfen, in dem die Trennung der Magnetpartikel mit der angelagerten Nukleinsäure von der Lösung erfolgt. In weiteren Bearbeitungsschritten werden mittels der Pipette Reagenzien entnommen und neue Reagenzien für die Durchführung eines weiteren Aufreinigungsschrittes zugegeben.

Die aufgereinigte Nukleinsäure wird in Gefäßen mit Pufferlösung, Enzymlösung und gegebenenfalls Salzlösung zusammengebracht (synonyme Wörter für diese verschiedenen Lösungen sind "Reagenz" oder "Reagenzien", "Reaktionsflüssigkeit" oder "Reaktionsflüssigkeiten"). Bekannt ist, auch diese Vorbereitungsschritte mittels Laborautomaten durchzuführen. Hierfür werden die Lösungen in Gefäßen auf der Arbeitsfläche bereitgestellt und mit den aufgereinigten Proben in Gefäßen für die PCR zusammenpipettiert. Die Gefäße mit den zusammenpipettierten Ansätzen für die PCR werden versiegelt und in einen Thermocycler eingesetzt, in dem die PCR durchgeführt wird.

Bei einem bekannten System der wird für die Vorbereitung von Proben für die PCR ein Halter in Form eines Aluminiumblocks verwendet, der eine auf einer Kreislinie angeordnete Serie von Aufnahmen hat, in die eine kreisringförmige Kette aus miteinander verbundenen einzelnen Gefäßen (kreisringförmige Gefäßkette) eingesetzt wird. Die einzelnen Gefäße der Gefäßkette werden nachstehend auch als "Kettengefäße" bezeichnet. Innerhalb der Serie von Aufnahmen ist ein nach oben vorstehender Bereich mit weiteren Aufnahmen (Einzelgefäßaufnahmen) für Einzelgefäße (unverbundene Gefäße) vorhanden, die die verschiedenen Reagenzien enthalten. Der vorstehende Bereich hat am Außenumfang Nuten, in die Vorsprünge an Innenumfang der kreisringförmigen Gefäßkette eingreifen, sodass diese in einer bestimmten Stellung am Halter angeordnet ist. Ferner hat der Halter außerhalb der Serie von Aufnahmen parallele Reihen mit kleineren weiteren Aufnahmen für weitere Einzelgefäße. Die weiteren Aufnahmen nehmen unverbundene Einzelgefäße mit den Reagenzien auf. Der Laborautomat pipettiert die aufgereinigten Proben und die für die PCR benötigten Reagenzien in die dafür vorgesehenen Gefäße der kreisringförmigen Gefäßkette hinein. Dabei geht die Steuerung des Laborautomaten davon aus, dass die benötigten Reagenzien innerhalb bestimmter weiterer Aufnahmen in Einzelgefäßen bereitgestellt werden. Je nachdem, welche Nukleinsäure bzw. Mikroorganismen nachzuweisen sind, werden spezielle Kits eingesetzt. Ein Kit ist eine Zusammenstellung von verschiedenen Reagenzien jeweils in Einzelgefäßen, die bei einer bestimmten biochemischen Reaktion (z. B. eine PCR Reaktion zum Nachweis bestimmter Nukleinsäuren bzw. Mikroorganismen) verwendet werden. Damit der Anwender die jeweiligen Einzelgefäße mit den Reagenzien des jeweiligen Kits korrekt (d. h. in einer bestimmten Anordnung) in die jeweils dafür vorgesehenen weiteren Aufnahmen einsetzt, sind diese weiteren Aufnahmen

Ein derartiges System wird insbesondere von der Firma Qiagen unter der Bezeichnung Rotor-Gene® und mit kreisringförmigen Gefässketten mit der Produktbezeichnung Rotor Disc® vermarktet.

Nachdem die Ansätze für die PCR in den Gefäßen der kreisringförmigen Gefäßkette zusammenpipettiert sind, entnimmt der Anwender die Einzelgefäße mit den Reagenzien aus dem Halter. Ferner setzt der Anwender den Halter mit der kreisringförmigen Gefäßkette in ein Versiegelungsgerät ein. In dem Versiegelungsgerät wird die kreisringförmige Gefäßkette versiegelt. Danach entnimmt der Anwender die kreisringförmige Gefäßkette aus dem Halter. Die versiegelte kreisringförmige Gefäßkette wird in den Thermocycler eingesetzt und der Halter im Laborautomaten weiterverwendet.

Bei dem bekannten System ist die Bestückung des Halters mit Einzelgefäßen aufwendig und fehlerträchtig, Da jedes Einzelgefäß in die Hand genommen werden muss und in die korrekte Aufnahme eingestellt werden muss. Auch die Entnahme der Einzelgefäße aus den Aufnahmen nach dem Entfernen der versiegelten kreisförmigen Gefäßkette aus dem Halter ist aufwendig, da jedes Einzelgefäß einzeln mit der Hand gegriffen werden muss.

EP 1 278 066 A2 beschreibt eine Vorrichtung zum Positionieren von Pipettenspitzen Diese weist einen äußeren Ring mit Aufnahmen für frische Pipettenspitzen und einen inneren Ring mit Aufnahmen für befüllte und unten versiegelte Pipettenspitzen. Die Pipettenspitzen sind in die Aufnahmen des inneren Ringes durch ein Loch in einem Deckel einsetzbar, unter dem eine Abstreifvorrichtung vorhanden ist. Durch ein anderes Loch im Deckel sind die Pipettenspitzen aus dem inneren Ring entnehmbar. Der äußere Ring weist am Außenumfang eine äußere Zahnung und der innere Ring weist eine innere Zahnung auf. Mit der inneren und äußeren Zahnung kämmen Antriebszahnräder, die von Motoren angetrieben sind, um den inneren Ring und den äußeren Ring für die Aufnahme und Abgabe von Pipettenspitzen zu verstellen.

Davon ausgehend liegt der Erfindung die Aufgabe zugrunde, eine Vorrichtung zum Positionieren von Gefäßen und eine Verwendung der Vorrichtung zum Positionieren von Gefäßen zu schaffen, die den Aufwand und das Fehlerrisiko bei der Vorbereitung der PCR mindert.

Die Aufgabe wird durch eine Vorrichtung mit den Merkmalen von Anspruch 1 gelöst. Ferner wird die Aufgabe durch eine Verwendung mit den Merkmalen von Anspruch 14 gelöst. Vorteilhafte Ausgestaltungen der Vorrichtung und der Verwendung sind in Unteransprüchen angegeben.

Gemäß Anspruch 1 hat die erfindungsgemäße Vorrichtung zum Positionieren von Gefäßen
a) einen Halter für Gefäße umfassend,
   - eine auf einer Kreislinie angeordnete Serie von Aufnahmen für eine kreisringförmige Gefäßkette,
   - einen innerhalb der Serie von Aufnahmen angeordneten zentralen Bereich mit weiteren Aufnahmen (Einzelgefäßaufnahmen) für Reagenzien enthaltende Einzelgefäße und
   - Mittel zum Ausrichten und
b) einen Träger für Einzelgefäße umfassend
   - eine Halteplatte in Form einer Kreisscheibe oder eines Teils einer Kreisscheibe mit Löchern für Einzelgefäße an bestimmten Positionen und
   - wenigstens ein weiteres Mittel zum Ausrichten des Trägers auf die Mittel zum Ausrichten des Halters in einer bestimmten Stellung, wobei in dieser Stellung die Löcher auf bestimmte weitere Aufnahmen ausgerichtet sind, die übrigen weiteren Aufnahmen durch die Halteplatte abgedeckt sind und mit Reaktionsflüssigkeit befüllte Einzelgefäße in die Löcher und die darauf ausgerichteten bestimmten
   Aufnahmen einsetzbar sind.

Die erfindungsgemäße Vorrichtung weist einen Halter für Gefäße und einen Träger für Einzelgefäße auf. Der Halter für Gefäße ist mit einer Serie von Aufnahmen auf einer Kreislinie für eine kreisringförmige Gefäßkette versehen. Ferner hat der Halter einen innerhalb der Serie von Aufnahmen angeordneten Bereich mit weiteren Aufnahmen für Reagenzien enthaltende Einzelgefäße. Zudem weist der Halter Mittel zum Ausrichten auf.

Der Träger für Einzelgefäße umfasst eine Halteplatte in Form einer Kreisscheibe oder eines Teils einer Kreisscheibe mit Löchern für Einzelgefäße an bestimmten Positionen. Der Träger ist mit weiteren Mitteln zum Ausrichten des Trägers auf die Mittel zum Ausrichten des Halters versehen. Wenn die weiteren Mittel zum Ausrichten auf die Mittel zum Ausrichten ausgerichtet sind, befindet sich der Träger in einer Stellung, in der die Löcher auf bestimmte weitere Aufnahmen ausgerichtet sind und die übrigen weiteren Aufnahmen durch die Halteplatte abgedeckt sind. In dieser Stellung sind mit Reaktionsflüssigkeit befüllte Einzelgefäße in die Löcher und die darauf ausgerichteten bestimmten Aufnahmen einsetzbar.

Bei der erfindungsgemäßen Vorrichtung kann der Träger vor dem Ausrichten auf den Halter mit Einzelgefäßen bestückt werden. Der Träger ist nur mit Löchern für Einzelgefäße mit Reagenzien versehen, die für die Vorbereitung von Ansätzen für die jeweils durchzuführende biochemische Reaktion, beispielsweise eine PCR, benötigt wird. Die eingesetzten Einzelgefäße stehen von der Unterseite der Halteplatte vor. Die Einzelgefäße sind unter Ausrichtung des Trägers auf den Halter leicht in die weiteren Aufnahmen des Halters einsetzbar. Wenn die Einzelgefäße in den weiteren Aufnahmen angeordnet sind, sitzt der Träger auf dem Halter auf. Alternativ wird zuerst der Träger unter Ausrichtung der weiteren Mittel zum Ausrichten auf die Mittel zum Ausrichten auf den Halter aufgesetzt. Danach wird der Träger mit den Einzelgefäßen bestückt. Bei beiden Alternativen deckt die Halteplatte diejenigen weiteren Aufnahmen ab, die nicht mit Reagenzien enthaltenden Einzelgefäßen zu bestücken sind. Die Gefahr einer falschen Bestückung der weiteren Aufnahmen mit Einzelgefäßen enthaltend verschiedene Reagenzien wird hierdurch verringert. Dennoch besteht die Möglichkeit, den Halter mit Einzelgefäßen enthaltend Reagenzien verschiedener Kits zu bestücken. Hierfür verwendet der Anwender vorzugsweise verschiedene Träger, die mit Löchern an bestimmten Positionen für das jeweils zu verwendende Kit versehen wird, sodass die Einzelgefäße mit den jeweils zu verwendenden Reagenzien in die vorgesehenen weiteren Aufnahmen eingesetzt werden. Grundsätzlich ist es aber möglich, dass der Anwender den Halter ohne einen Träger mit Einzelgefäßen bestückt, die Reagenzien eines anderen Sets enthalten. Somit kann der Anwender den Träger als Schablone zum Bestücken des Halters nutzen. Der Aufwand für die Bestückung des Halters mit den vorgesehenen Einzelgefäßen an den vorgesehenen Stellen und das Risiko einer fehlerhaften Bestückung sind beträchtlich reduziert.

Der Träger kann überdies zum Entnehmen der Einzelgefäße aus den weiteren Aufnahmen verwendet werden. Hierzu wird der Träger mit den in die Löcher eingesetzten Einzelgefäßen angehoben. Wenn die Einzelgefäße komplett entleert sind, können sie einfach aus dem Träger ausgekippt werden. Das Einsetzen und Entnehmen der Einzelgefäße mittels des Trägers setzt voraus, dass die Einzelgefäße die Löcher seitlich etwas übergreifen, sodass sie nicht aus dem Träger herausrutschen.

Die Halteplatte ist vorzugsweise kreisscheibenförmig, insbesondere wenn viele weitere Aufnahmen des Halters mit Einzelgefäßen zu bestücken sind. Alternativ hat die Halteplatte die Form eines Teils einer Kreisscheibe, z. B. einer Kreisringscheibe oder einer Kreissegmentscheibe, insbesondere wenn wenige weitere Aufnahmen des Halters mit Einzelgefäßen zu bestücken sind.

Gemäß einer Ausgestaltung weisen die Mittel zum Ausrichten des Halters einen den Bereich mit den weiteren Aufnahmen kreisförmig umgebenen Vorsprung auf, der an mindestens einer bestimmten Position eine Aussparung aufweist und weisen die weiteren Mittel zum Ausrichten des Trägers einen passgenau in die Aussparung einsetzbaren Vorsprung am Rand der Halteplatte auf. Durch das passgenaue Einsetzen des Vorsprunges in die Aussparung wird die korrekte Ausrichtung des Trägers auf den Halter sichergestellt. Falls der Halter mehrere Aussparungen und der Träger mehrere Vorsprünge aufweist, sind diese so aufeinander abgestimmt, dass der Träger in nur einer einzigen Ausrichtung auf den Halter ausrichtbar ist. dass nur genau ein bestimmter Vorsprung in eine bestimmte Aussparung hineinpasst. Hierfür kann mindestens eine Aussparung und der darin einzusetzende Vorsprung spezifische Abmessungen haben und /oder der Winkelabstand benachbarter Aussparungen und Vorsprünge unterschiedlich sein.

Gemäß einer weiteren Ausgestaltung ist die Serie von Aufnahmen an einem ersten zylindrischen Podest des Halters ausgebildet und sind der Bereich mit den weiteren Aufnahmen und die Mittel zum Ausrichten an einem zweiten zylindrischen Podest des Halters ausgebildet, wobei dieses zweite Podest auf dem ersten Podest ausgebildet ist.

Gemäß einer weiteren Ausgestaltung sind die weiteren Aufnahmen des Halters weitere Serien von Aufnahmen, die auf konzentrischen Kreislinien angeordnet sind und sind Löcher des Trägers ebenfalls auf konzentrischen Kreislinien angeordnet.

Gemäß weiteren Ausgestaltungen sind die weiteren Aufnahmen des Halters und die Löcher des Trägers jeweils auf drei konzentrischen Kreislinien angeordnet. Gemäß einer weiteren Ausgestaltung sind auf der äußeren Kreislinie 16 weitere Aufnahmen, auf der mittleren Kreislinie 10 weitere Aufnahmen und auf der inneren Kreislinie vier weitere Aufnahmen angeordnet.

Gemäß einer weiteren Ausgestaltung weist die Vorrichtung eine abnehmbare Abdeckung auf, welche die Aufnahmen und die weiteren Aufnahmen in einem Abstand überdeckt. Die Abdeckung kann den Halter und den Träger mit eingesetzten Einzelgefäßen und einer eingesetzten kreisringförmigen Gefäßkette abdecken. Die Abdeckung kann auf Halter und Träger platziert werden, bevor und/oder nachdem der Laborautomat die Ansätze für die PCR in den Kettengefäßen der Gefäßkette zusammenpipettiert. Die Abdeckung schützt die Einzelgefäße, die Gefäßkette und die darin enthaltenen Flüssigkeiten vor Verunreinigungen. Vor dem Vorbereiten der Ansätze kann die Abdeckung beispielsweise mittels eines Greifgerätes des Laborautomaten abgenommen und auf einer Parkposition der Arbeitsfläche des Laborautomaten abgesetzt werden. Nach dem Vorbereiten der Ansätze kann der Greifer die Abdeckung in der Parkposition aufnehmen und auf Halter und Träger absetzen.

Gemäß einer weiteren Ausgestaltung weist das erste Podest am äußeren Umfang radial vorstehenden Rippen auf, in die auf die Rippen abgestimmte untere Aussparungen am unteren Rand der Abdeckung eingreifen. Hierdurch wird die Abdeckung in einer definierten Position sicher auf den Halter positioniert. Die Abdeckung ist mittels eines Greifers eines Laborautomaten in vertikaler Richtung auf den Halter absetzbar und vom Halter abnehmbar.

Gemäß einer weiteren Ausgestaltung weist der Halter unten Positionierungsmittel zum Positionieren auf mindesten einem Arbeitsplatz eines Laborautomaten für Mikrotiterplatten gemäß dem Standard des "American National Standard Institut (AINSI) bzw. SBS-Standard (Society for Biomolecular Sciences) auf. Die Arbeitsplätze von Laborautomaten sind in der Regel auf das Format von Mikrotiterplatten gemäß dem AiNSI/SBS-Standard abgestimmt. Hierfür ist die Grundfläche der Arbeitsplätze an die äußeren Abmessungen der rechteckigen Basis (Footprint) von Mikrotiterplatten gemäß "ANSI/SBS 1-2004:Mikorplates-Footprint Dimension" angepasst. Diese Abmessungen betragen 127,676 mm x 85,48 mm, wobei auch die Toleranzen standardisiert sind. Die Grundflächen dieser Arbeitsplätze sind durch Anschläge oder andere Positionierungsmittel der Arbeitsplätze begrenzt, die eine genaue Positionierung von Mikrotiterplatten sicherstellen. Bei den Laborautomaten vom Typ epMotion® der Eppendorf AG sind die Arbeitsplätze durch fünf an ihren Ecken von der Arbeitsfläche hochstehende Stifte begrenzt. Davon sind vier Stifte fest mit der Arbeitsfläche verbunden und ist ein Stift in Richtung auf die diagonal gegenüberliegende Ecke beweglich gelagert und durch eine Feder zu der gegenüberliegenden Ecke hin vorgespannt. An der gegenüberliegenden Ecke sind zwei fest mit der Arbeitsfläche verbundene Stifte vorhanden. An den weiteren Ecken ist jeweils nur ein Stift vorhanden. Die fest mit der Arbeitsfläche verbundenen Stifte liegen nahe der Ecken an einer auf den Arbeitsplatz aufgesetzten Mikrotiterplatte an. Der bewegliche Stift liegt an einer weiteren Ecke der Mikrotiterplatte an. Der bewegliche Stift erleichtert das Aufsetzen der Mikrotiterplatte auf und das Abnehmen der Mikrotiterplatte von der Arbeitsfläche. Er drückt die Mikrotiterplatte gegen die starren Stifte, sodass sie exakt auf der Arbeitsfläche positioniert sind.

Der Halter ist mit den darauf angeordneten Gefäßen direkt auf mindestens einem Arbeitsplatz positionierbar. Aufgrund der Anpassung seiner Positionierungsmittel an den SBS-Standard für Mikrotiterplatten ist eine genaue Positionierung leicht möglich. Der Benutzer muss lediglich den Halter mittels der Positionierungsmittel auf einem Arbeitsplatz anordnen. Der Steuerung des Laborautomaten ist der vorgesehen Arbeitsplatz für die Positionierung des Halters bekannt, sodass er die Pipette in die jeweils vorgesehenen Gefäße eintauchen kann.

Gemäß einer weiteren Ausgestaltung sind die Positionierungsmittel äußere Ränder einer Basis des Halters, deren Abmessungen den Abmessungen mindestens eines Arbeitsplatzes eines Laborautomaten für eine Mikrotiterplatte gemäß SBS-Standard entsprechen.

Gemäß einer weiteren Ausgestaltung weist der Halter einen die Aufnahmen und die weiteren Aufnahmen aufweisenden Grundkörper und einen den Grundkörper haltenden Adapter mit den Positionierungsmitteln auf oder ist der Halter ein die Aufnahmen aufweisender Grundkörper. Mittels eines Adapters kann der Halter auf einem einzigen Arbeitsplatz eines Laborautomaten positioniert werden, auch wenn seine Abmessungen die Abmessungen des Arbeitsplatzes überschreiten oder unterschreiten.

Gemäß einer weiteren Ausgestaltung weist die Halteplatte des Trägers auf der Oberseite neben jedem Loch mindestens eine bestimmte Kennzeichnung auf. Die Kennzeichnung erleichtert dem Anwender die richtige Positionierung der Gefäße in den Löchern. Die Kennzeichnung weist gemäß einer Ausgestaltung einen Farbcode, Ziffern, Buchstaben, Symbole oder eine Kombination der vorbezeichneten Arten von Codes auf. Die Einzelgefäße sind vorzugsweise mit entsprechenden Codes versehen.

Gemäß einer weiteren Ausgestaltung stehen von der Unterseite der Halteplatte in weitere Aufnahmen des Trägers einsetzbare Füße zum Aufsetzen des Trägers auf einen Untergrund vor, um die Halteplatte in einem Abstand vom Untergrund abzustützen, und/oder steht von der Oberseite der Halteplatte ein Griffelement nach oben vor. Wenn der Träger mit den Füßen auf einen Untergrund abgesetzt ist, können Einzelgefäße in die Löcher eingesetzt werden. Der mit Einzelgefäßen bestückte Träger ist mit den Füßen in weitere Aufnahmen des Halters einsetzbar. Alternativ kann der Träger direkt auf dem Halter der Vorrichtung oder auf einen anderen Halter abgesetzt werden, um Einzelgefäße einzusetzen. Die Füße können dann entfallen. Das Griffelement erleichtert das Tragen des bestückten Halters und vermeidet Kontaminationen eingesetzter Einzelgefäße und darin enthaltener Flüssigkeiten.

Gemäß einer weiteren Ausgestaltung umfasst die Vorrichtung mehrere Träger, wobei jeder Träger eine spezifische bestimmte Anordnung der Löcher in der Halteplatte aufweist. Die verschiedenen Träger dienen der Vorbereitung verschiedener Ansätze für die PCR. Falls die PCR mit einem anderen Ansatz durchgeführt werden soll, kann ein anderer Halter mit einer spezifischen Anordnung von Löchern verwendet werden.

Die Anordnung der Löcher im Träger ist gemäß einer bevorzugten Ausgestaltung so optimiert, dass der Laborautomat bei der Vorbereitung der Ansätze, für die der Träger bestimmt ist, mit der Pipette möglichst geringe Verfahrwege zurücklegt.

Gemäß einer weiteren Ausgestaltung ist der Halter und/oder der Träger aus Metall hergestellt. Dies begünstigt eine Temperierung der Vorrichtung. Zur Temperierung kann die Vorrichtung auf einer Heiz- und/oder Kühlstation des Laborautomaten abgestellt werden.

Einige vorteilhafte Verwendungen der zuvor beschriebenen Vorrichtungen sind nachstehend zusammengefasst:

Gemäß Anspruch 14 werden bei einer Verwendung einer Vorrichtung zum Positionieren von Gefäßen gemäß einem der Ansprüche 1 bis 13
- in die auf einer Kreislinie angeordneten Aufnahmen des Halters eine kreisringförmige Gefäßkette eingesetzt,
- in die Löcher des Trägers mit Reagenzien befüllte Einzelgefäße eingesetzt, wobei in bestimmte Löcher bestimmte Einzelgefäße eingesetzt werden, die bestimmte Reagenzien enthalten,
- der Träger mit den enthaltenden Einzelgefäßen in die weiteren Aufnahmen des Halters und mit den weiteren Mitteln zum Positionieren auf die Mittel zum Positionieren des Halters ausgerichtet und in der korrekten Ausrichtung auf dien Mittel zum Halter aufgesetzt und
- Reagenzien aus bestimmten Einzelgefäßen entnommen und in bestimmte Kettengefäße der Gefäßkette eingefüllt.

Gemäß einer Ausgestaltung werden die Einzelgefäße in Löcher eingesetzt, neben denen mindestens eine Kennzeichnung angeordnet ist, die auf das Reagenz hinweist, das in dem jeweilig einzusetzenden Einzelgefäß enthalten ist.

Gemäß einer weiteren Ausgestaltung wird der Halter auf einer Arbeitsfläche eines Laborautomaten positioniert.

Gemäß einer weiteren Ausgestaltung wird der Halter auf einem Arbeitsplatz eines Laborautomaten für Mikrotiterplatten gemäße dem SBS-Standard positioniert.

Gemäß einer weiteren Ausgestaltung werden die Reagenzien mittels einer Pipette des Laborautomaten aus den Einzelgefäßen entnommen und in die Kettengefäße der Gefäßkette hineinpipettiert. Gemäß einer weiteren Ausgestaltung werden mittels der Pipette Proben in die Kettengefäße der Gefäßkette hineinpipettiert.

Gemäß einer weiteren Ausgestaltung wird nach dem Befüllen der Gefäßkette der Träger mit den enthaltenen Einzelgefäßen von der Vorrichtung zum Halten abgenommen und der Träger entleert.

Gemäß einer weiteren Ausgestaltung wird die Gefäßkette nach dem Befüllen auf dem Halter versiegelt.

Die Erfindung wird nachfolgen anhand der anliegenden Zeichnungen eines Ausführungsbeispiels näher erläutert. In den Zeichnungen zeigen:
- Fig.1: die Vorrichtung zum Positionieren von Gefäßen mit einer kreisringförmigen Gefäßkette und Einzelgefäßen in einem perspektivischen Sprengbild;
- Fig.2: einen Halter der Vorrichtung in einer Perspektivansicht;
- Fig. 3: denselben Halter in der Draufsicht;
- Fig. 4: einen Träger der Vorrichtung in einer Perspektivansicht;
- Fig. 5: die Halteplatte desselben Trägers in einer Draufsicht;
- Fig. 6: einen weiteren Träger der Vorrichtung in einer Perspektivansicht;
- Fig. 7: die Halteplatte desselben Trägers in einer Draufsicht;
- Fig. 8: einen weiteren Träger der Vorrichtung in einer Perspektivansicht;
- Fig. 9: die Halteplatte desselben Trägers in der Draufsicht,
- Fig. 10: die Abdeckung der Vorrichtung in einer Perspektivansicht;
- Fig. 11: die Arbeitsfläche eines Laborautomaten bestückt mit Vorrichtungen zum Vorbereiten von Proben für die PCR in einer Perspektivansicht.

In dieser Anmeldung beziehen sich die Angaben "oben" und "unten" auf die Anordnung der Vorrichtung zum Positionieren mit dem Halter auf einem horizontalen Untergrund und mit dem Träger oben auf dem Halter.

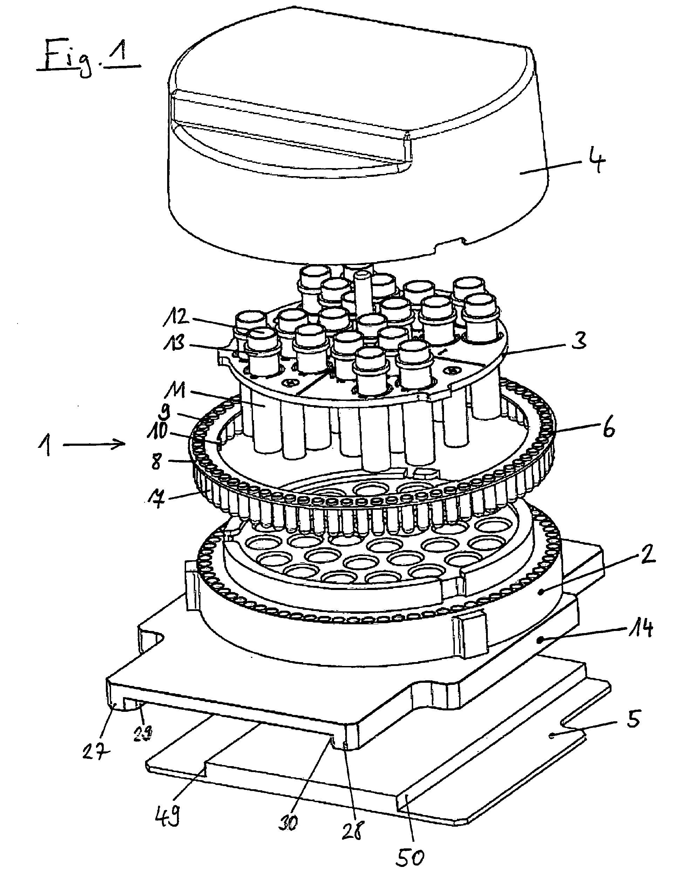

Gemäß Fig. 1 hat eine Vorrichtung zum Positionieren 1 einen Halter 2, einen Träger 3, eine Abdeckung 4 und einen Adapter 5.

Fig. 1 zeigt zudem eine kreisringförmige Gefäßkette 6 zum Einsetzen in den Halter 2. Die kreisringförmige Gefäßkette 6 umfasst 72 parallel ausgebildete einzelne Kettengefäße 7, die an ihren oberen Rändern durch ein kreisringscheibenförmiges Verbindungselement 8 miteinander verbunden sind. Die einzelnen Kettengefäße 7 haben ihre Kettengefäßöffnungen 9 etwa in der Ebene des Verbindungselementes 8. Die kreisringförmige Gefäßkette wird von der Firma Qiagen unter der Produktbezeichnung Rotor Disc® vermarktet.

Die kreisringförmige Gefäßkette 6 hat am Innenumfang des Verbindungselements 8 an verschiedenen Positionen radial nach innen vorstehende, innere Vorsprünge 10. Die inneren Vorsprünge 10 sind in Umfangsrichtung des Verbindungselementes 8 unterschiedlich breit und/oder weisen verschiedene Winkelabstände voneinander auf. Die inneren Vorsprünge 10 sind gleichmäßig über den Innenumfang der kreisringförmigen Gefäßkette 6 verteilt. Ein innerer Vorsprung 10 ist in Umfangsrichtung des Verbindungselementes 8 gesehen breiter als die beiden weiteren inneren Vorsprünge 10.

Ferner sind gemäß Fig. 1 Einzelgefäße 11, die zur Aufnahme von Reagenzien bestimmt sind, teilweise in den Träger eingesetzt. Sämtliche Einzelgefäße 11 haben eine übereinstimmende äußere Kontur. Sie sind außen kreiszylindrisch und unten durch einen Boden geschlossen. Oben haben sie eine Einzelgefäßöffnung 12. Etwas unterhalb der Einzelgefäßöffnung 11 haben die Einzelgefäße 11 einen radial nach außen vorstehenden, umlaufenden Vorsprung 13. Die innere Kontur der Einzelgefäße 11 kann unterschiedlich sein, sodass die Einzelgefäße 11 mit unterschiedlichen Mengen an Flüssigkeit befüllbar sind und der Füllstand in den verschiedenen Einzelgefäßen 11 im Wesentlichen übereinstimmt.

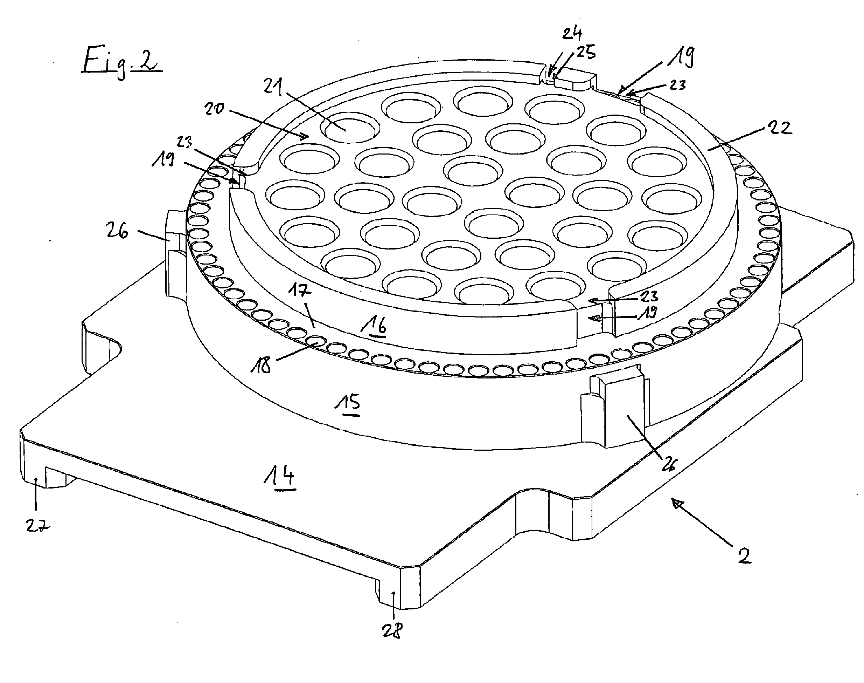

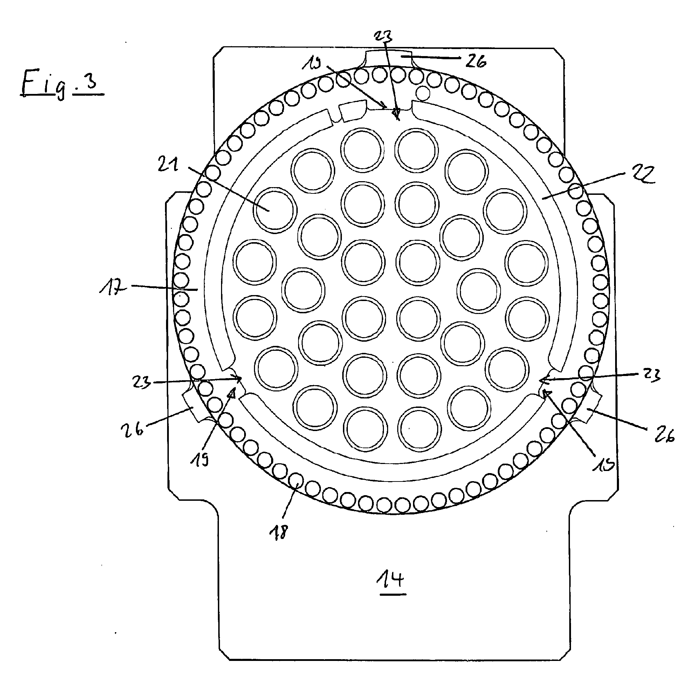

Gemäß Fig. 2 und 3 weist ein Halter 2 eine in der Draufsicht kreuzförmige Grundplatte 14 auf. Oben steht von der Grundplatte 14 ein zylindrisches erstes Podest 15 vor. Von dem ersten Podest 15 steht nach oben ein zylindrisches zweites Podest 16 vor. Zwischen dem ersten Podest 15 und dem zweiten Podest 16 läuft eine horizontale Stufe 17 um. Auf der Stufe 17 ist auf einer Kreislinie eine Serie von Aufnahmen 18 vorhanden. Im Beispiel sind dies 72 Aufnahmen. Jede Aufnahme 18 ist so bemessen, dass sie ein einzelnes Kettengefäß 7 der kreisringförmigen Gefäßkette 6 aufnehmen kann.

Am äußeren Umfang des zweiten Podestes 16 sind drei axial gerichtete Nuten 19 vorhanden. Diese sind gleichmäßig über den Umfang des zweiten Podestes 16 verteilt. Die in Fig. 2 obere Nut 19 ist breiter als die beiden weiteren Nuten 19. Die kreisringförmige Gefäßkette 6 ist mit inneren Vorsprüngen 10 in einer bestimmten Drehstellung in die Nuten 19 einsetzbar, in der der breitere innere Vorsprung 10 in die breitere Nut 19 eingreift. In dieser Stellung ist die kreisringförmige Gefäßkette 6 mit ihren Kettengefäßen 7 in die Aufnahmen 18 einsetzbar.

Das zweite Podest 16 ist an der Oberseite eben. Dieser Bereich 20 des Halters 2 ist innerhalb der Aufnahmen 18 angeordnet. Der Bereich 20 weist weitere Aufnahmen 21 auf. Die weiteren Aufnahmen 21 sind auf 3 Kreislinien angeordnet, die konzentrisch zu einander und zu dem Kreis sind, auf dem die Aufnahmen 18 angeordnet sind. Auf der äußeren Kreislinie sind 16 weitere Aufnahmen 21, auf der mittleren Kreislinie 10 sind weitere Aufnahmen 21 und auf der inneren Kreislinie 4 sind weitere Aufnahmen 21 angeordnet.

Am äußeren Rand hat das zweite Podest 16 einen hochstehenden Vorsprung 22, der den Bereich 20 mit den weiteren Aufnahmen 21 kreisringförmig umgibt. Der Vorsprung 22 weist an 3 gleichmäßig voneinander beabstandeten Positionen direkt oberhalb der Nuten 19 Aussparungen 23 auf. Die in Fig. 3 obere Aussparung 23 hat in Umfangsrichtung des Bereichs 20 eine größere Breite als die beiden weiteren Aussparungen 23. Die Breite der Aussparungen 23 entspricht der Breite der jeweils darunter angeordneten Nuten 19.

Neben der in Fig. 3 oberen Aussparung 23 ist in dem hochstehenden Vorsprung 22 eine weitere Aussparung 24 vorhanden, die oberhalb einer weiteren Nut 25 auf dem Umfang des zweiten Podestes 16 angeordnet ist. Die weitere Aussparung 24 hat in Umfangsrichtung des zweiten Podestes 16 eine geringere Breite als die Aussparungen 23. Die Breite der weiteren Aussparung 24 entspricht der Breite der weiteren Nut 25.

Jede weitere Aufnahme 21 hat an ihrem Rand eine trichterförmige Ansenkung.

Das erste Podest 15 hat am äußeren Umfang drei radial nach außen vorstehende Rippen 26. Jede Rippe 26 ist auf eine Nut 19 am Umfang des zweiten Podestes 16 ausgerichtet. Die Breite der Rippen 26 in Umfangsrichtung des ersten Podestes 15 entspricht der Breite der jeweils darauf ausgerichteten Nut 19.

Die Grundplatte 14 weist unten an den in Fig. 3 linken und rechten Seiten vorstehende streifenförmige Sockel 27, 28 auf.

Ferner hat die Grundplatte 14 an der Unterseite Mittel zum Verbinden 29, 30 mit dem Adapter 5. Die Mittel zum Verbinden 29, 30 sind beispielsweise Führungsflächen 29, 30 an den Innenseiten der Sockel 27,28 der Grundplatte 14.

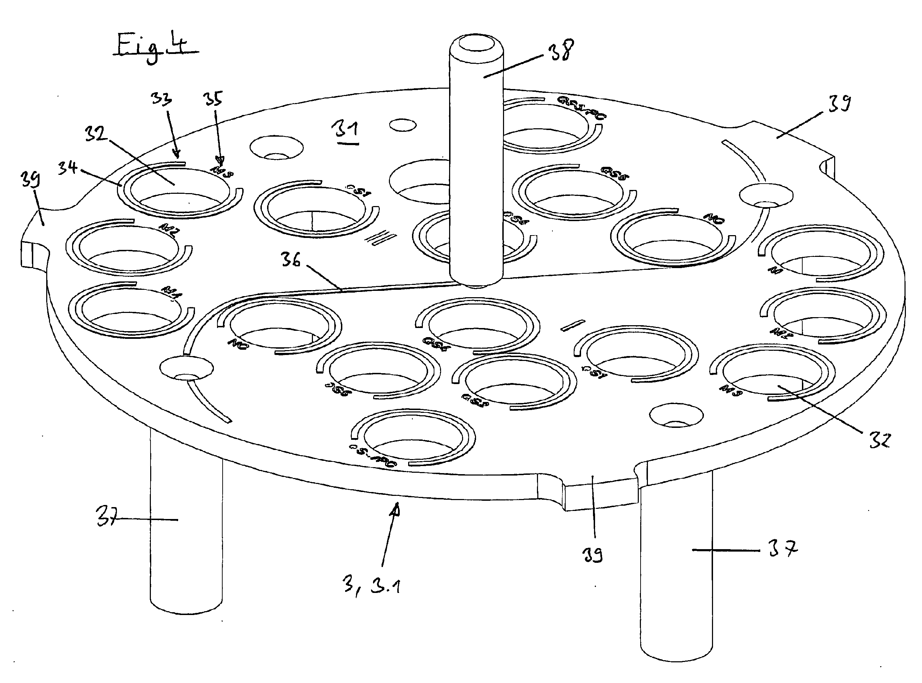

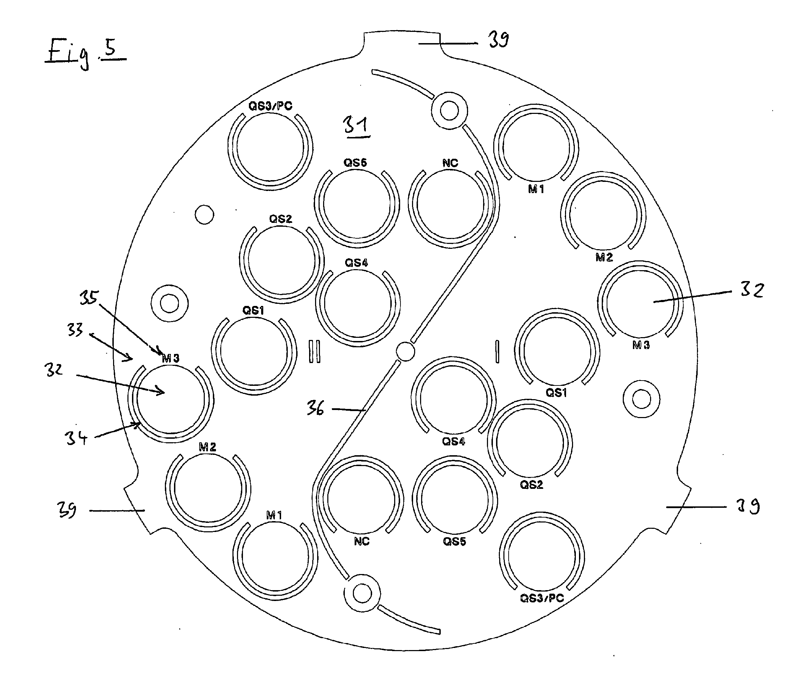

Gemäß Fig. 4 und 5 hat der Träger 3.1 eine kreisringförmige Halteplatte 31 mit Löchern 32. Die Löcher 32 sind in einer bestimmten Anordnung auf 3 konzentrischen Kreislinien angeordnet. Der Durchmesser dieser Kreislinien entspricht den Durchmessern der Kreislinien, auf denen die weiteren Aufnahmen 21 des Halters 2 angeordnet sind. Die Löcher 32 der Halteplatte 31 sind deckungsgleich über bestimmten weiteren Aufnahmen 21 des Halters 2 anordenbar. Die Anzahl der Löcher 32 der Halteplatte 31 ist kleiner als die Anzahl der weiteren Aufnahmen 21 des Halters 2, sodass bei deckungsgleicher Anordnung der Löcher 32 über den weiteren Aufnahmen 24 des Halters einige weitere Aufnahmen 24 durch die Halteplatte 31 abgedeckt werden. Die Anordnung der Löcher 32 auf der Halteplatte 31 ist abgestimmt auf die Vorbereitung von Ansätzen von für die PCR unter Verwendung eines speziellen Kits aus verschiedenen Reagenzien.

Neben jedem Loch 32 sind auf der Oberseite der Halteplatte 31 Kennzeichnungen 33 angeordnet, die auf das Reagenz hinweisen, die in einem einzusetzenden Einzelgefäß 11 enthalten sein muss.

Die Kennzeichnungen 33 umfassen eine Farbkennzeichnung 34 in Form eines das jeweilige Loch 32 teilweise umschließenden Farbringes und eine alphanumerische Kennzeichnung 35, die in einer Lücke der Farbkennzeichnung 34 angeordnet ist. Im Beispiel sind punktsymmetrisch bezüglich des Zentrums der Halteplatte 31 auf verschiedenen Seiten einer Trennungslinie 36 in Sektoren I und II Löcher 32 mit denselben Kennzeichnungen 33 angeordnet. Dies erleichtert dem Anwender eine Bestückung der Halteplatte 31 mit Einzelgefäßen 11, die Reagenzien enthalten, die durch die jeweiligen Kennzeichnungen 33 bezeichnet sind.

Von der Unterseite der Halteplatte 31 stehen 4 Füße 37 nach unten vor. Die Füße 37 sind an Positionen angeordnet, unter denen sich weitere Aufnahmen 21 des Halters 2 befinden, wenn der Träger 3.1 mit den Löchern 32 deckungsgleich über den weiteren Aufnahmen 21 des Halters 2 angeordnet sind. Der Durchmesser der Füße 37 und die Höhe der Füße 37 sind so bemessen, dass diese in weitere Aufnahmen 21 einsetzbar sind und die Halteplatte 31 auf die Oberseite des weiteren Podests 16 aufsetzbar ist.

Vom Zentrum der Halteplatte 31 steht nach oben vertikal ein stiftförmiges Griffelement 38 hoch.

Vom Rand der Halteplatte 31 stehen radial nach außen äußere Vorsprünge 39 vor. Im Beispiel sind es drei äußere Vorsprünge 39. Benachbarte äußere Vorsprünge 39 haben denselben Winkelabstand von 120° von einander. Der in Fig. 5 obere äußere Vorsprung 39 hat in Umfangsrichtung der Halteplatte 31 eine größere Breite als die beiden weiteren äußeren Vorsprünge 39. Die Breite der äußeren Vorsprünge 39 ist an die Breite der Aussparungen 23 angepasst, sodass der in Fig. 5 obere äußere Vorsprung 30 passgenau in die in Fig. 2 obere Aussparung 23 einsetzbar ist und die beiden weiteren äußeren Vorsprünge 39 passgenau in die weiteren Aussparungen 23 einsetzbar sind. Somit ist der Träger 3.1 in der definierten Ausrichtung auf den Halter 2 aufsetzbar, in der die äußeren Vorsprünge 39 in der zuvor beschriebenen Weise in die Aussparungen 23 eingreifen, die Löcher 32 über bestimmten weitere Aufnahmen 21 angeordnet sind und die Füße 37 in bestimmte weitere Aufnahmen 21 eingreifen. In dieser Ausrichtung ist der Träger 3.1 mit der Halteplatte 31 auf die Oberseite des zweiten Podestes 16 aufsetzbar. Dadurch ist gewährleistet, dass in die Löcher 32 eingesetzte Einzelgefäße 11 in bestimmte weitere Aufnahmen 21 des Halters 2 eingesetzt werden.

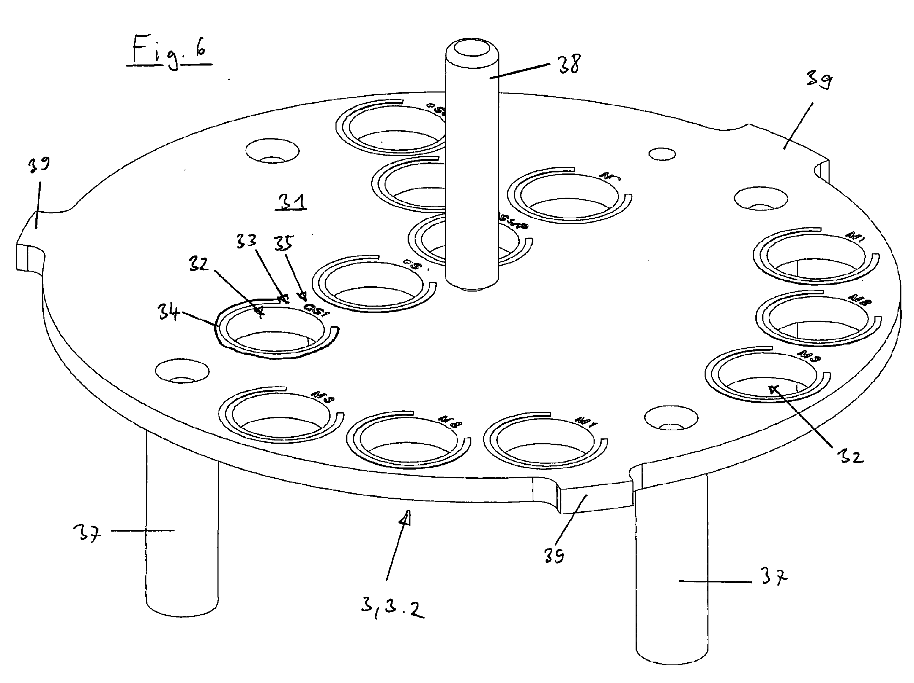

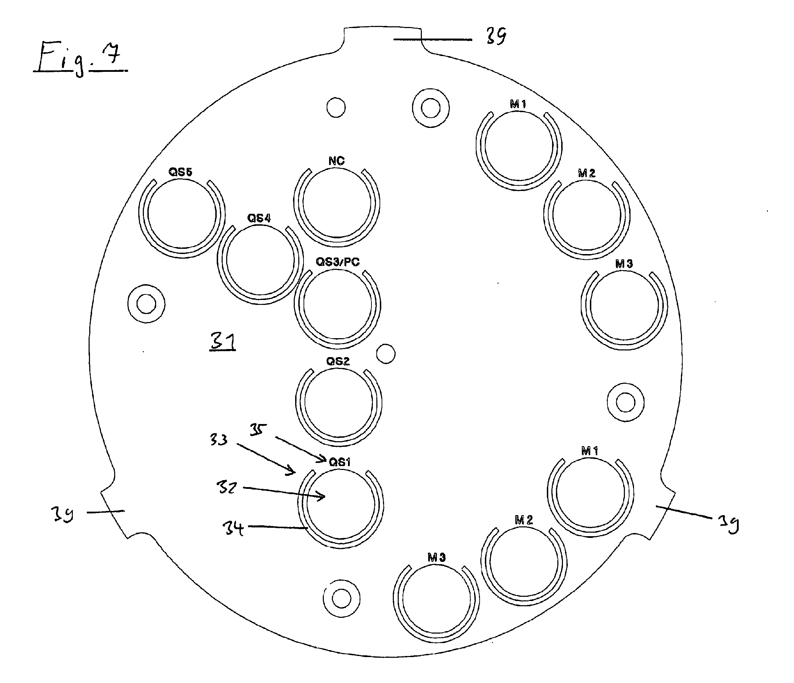

Der Träger 3.2 gemäß Fig. 6 und 7 unterscheidet sich von dem vorbeschriebenen Träger 3.1 dadurch, dass er eine andere Anzahl und Anordnung von Löchern 32 in der Halteplatte 31 aufweist. Die Löcher 32 sind wiederum durch Kennzeichnungen 33 in Form einer Farbkennzeichnung 34 und einer alphanumerischen Kennzeichnung 35 gekennzeichnet. Aus den Fig. 6 und 7 ist ersichtlich, dass zwei Gruppen Löcher 32 vorhanden sind, welche dieselben Kennzeichnungen aufweisen, sodass sie in der gleichen Weise mit Einzelgefäßen 11 zu bestücken sind, die verschiedene Reagenzien enthalten. Die übrigen Löcher 32 sind gemäß ihren Kennzeichnungen 33 jeweils mit weiteren Einzelgefäßen 11 zu bestücken, in denen andere bestimmte Reagenzien enthalten sind. Dieser Träger 3 dient der Bestückung des Halters 2 mit Reagenzien in Einzelgefäßen 11 für die Vorbereitung anderer spezieller Ansätze für die PCR.

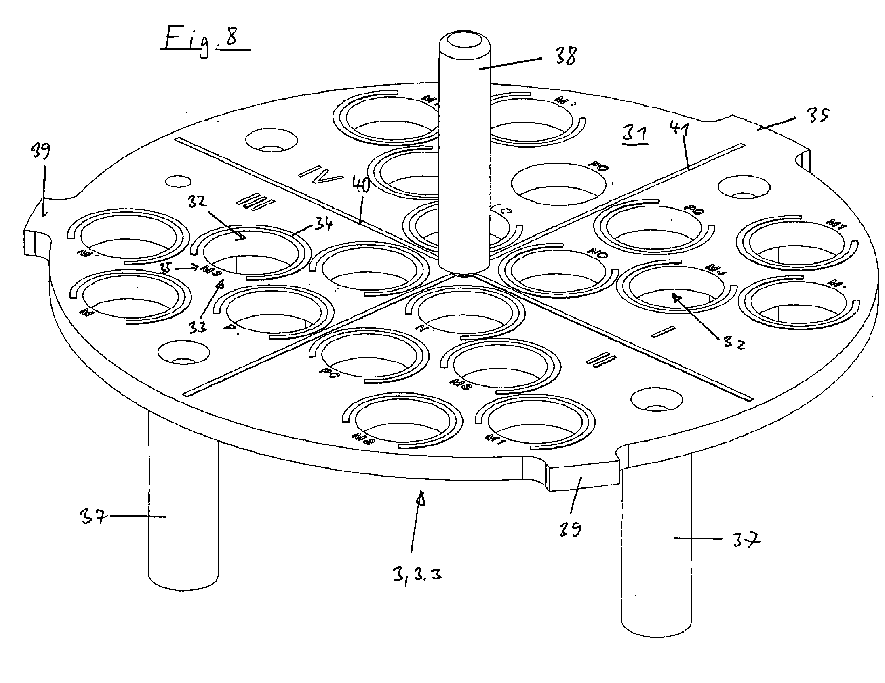

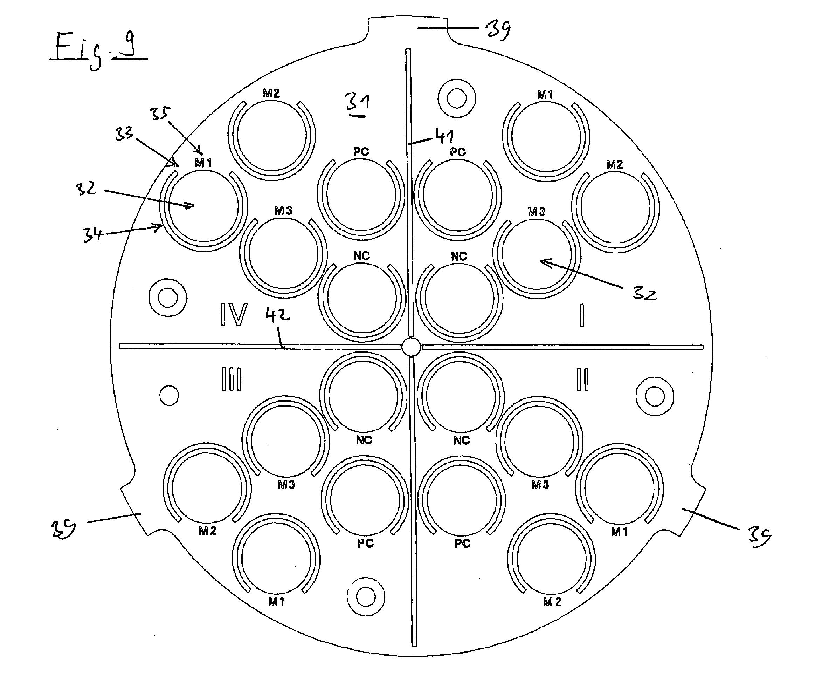

Der Träger 3.2 gemäß Fig. 8 und 9 unterscheidet sich von den vorbeschriebenen Trägern 3.1, 3.2 ebenfalls durch die Anzahl und Anordnung der Löcher 32 in der Halteplatte 31. Jedem Loch 32 sind wiederum Kennzeichnungen 33 in Form einer Farbkennzeichnung 34 und einer alphanumerischen Kennzeichnung 35 zugeordnet. Die Halteplatte 31 ist durch zwei in der Art eines Koordinatensystems angeordnete Trennungsachsen 40, 41 mit dem Nullpunkt im Zentrum der Halteplatte 31 in 4 Sektoren I-IV unterteilt. In den Sektoren I-IV sind Löcher 32, die mit denselben Kennzeichnungen 33 versehen sind, punksymmetrisch bezüglich des Zentrums der Halteplatte 31 und axialsymmetrisch bezüglich der Trennungsachsen 40, 41 angeordnet. Dies erleichtert dem Anwender die Bestückung der Löcher 32 mit Einzelgefäßen 11, die Reagenzien enthalten, auf die die jeweiligen Kennzeichnungen 33 hinweisen.

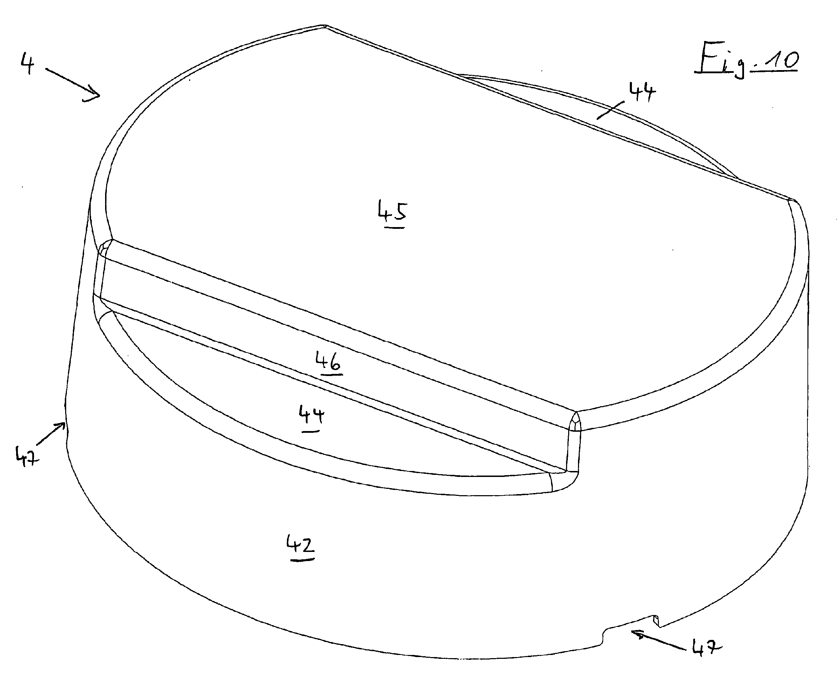

Gemäß Fig. 10 hat die haubenartige Abdeckung eine leicht konisch sich nach oben verjüngende oder zylindrische Seitenwand 42 und eine Deckwand 43. Die Deckwand 43 hat seitliche Deckwandabschnitte 44 und einen weiter hochstehenden mittleren Deckwandabschnitt 45 mit seitlichen Flanken 46. An den seitlichen Flanken 46 ist die Abdeckung 4 von einem Greifer eines Laborautomaten greifbar.

Am unteren Rand der Seitenwand 42 hat die Abdeckung 4 axial gerichtete untere Aussparungen 47. Im Beispiel hat die Abdeckung 4 insgesamt 3 untere Aussparungen 47. Eine untere Aussparung 47 hat in Umfangsrichtung der Seitenwand 42 eine Breite, die der Breite der breitesten Rippe 26 des Halters 2 entspricht, die in Fig. 3 oben gezeigt ist, sodass die untere Aussparung 47 die breiteste Rippe 26 passgenau aufnehmen kann. Die übrigen unteren Aussparungen 47 sind so bemessen, dass sie die übrigen Rippen 26 des Halters 2 passgenau aufnehmen können. Infolgedessen ist die Abdeckung 4 nur in einer bestimmten Ausrichtung auf den Halter 2 aufsetzbar.

Gemäß Fig. 1 weist der Adapter 5 eine rechteckige Adapterplatte 48 auf, deren äußere Abmessungen den äußeren Abmessungen der Grundfläche einer Mikrotiterplatte gemäß SBS-Standard entsprechen. Ferner weist der Adapter 5 weitere Mittel zum Verbinden 49, 50 in Form von Seitenflächen an einem Sockel auf, die sich an den Führungsflächen 29, 30 des Halters 2 abstützen. Zudem kann der Adapter 5 Stifte aufweisen, die in Bohrungen an der Unterseite des Grundkörpers 14 einsetzbar sind.

Der Adapter 5 ist durch Verbinden der weiteren Mittel zum Verbinden 49, 50 mit den Mitteln zum Verbinden 29, 30 mit dem Halter 2 lösbar verbindbar. Ferner ist der Halter 2 mittels des Adapters 5 auf einem Arbeitsplatz des Laborautomaten positionierbar.

Der Halter 2 ist vorzugsweise aus Metall hergestellt, insbesondere aus Aluminium. Weiterhin vorzugsweise ist der Halter 2 ein einteiliges Bauteil.

Der Träger 3 und/oder der Adapter 5 ist vorzugsweise aus einem Metall hergestellt, vorzugsweise ebenfalls aus Aluminium. Vorzugsweise werden die Halteplatte 31 sowie die Füße 37 und das Griffelement 38 bzw. die Adapterplatte 48 und die Stifte gesondert gefertigt und zusammen montiert.

Die Abdeckung 4 ist vorzugsweise aus einem Kunststoff hergestellt. Weiterhin vorzugsweise ist die Abdeckung 4 spritzgegossen. Weiterhin vorzugsweise ist die Abdeckung aus einem transparenten Kunststoff hergestellt.

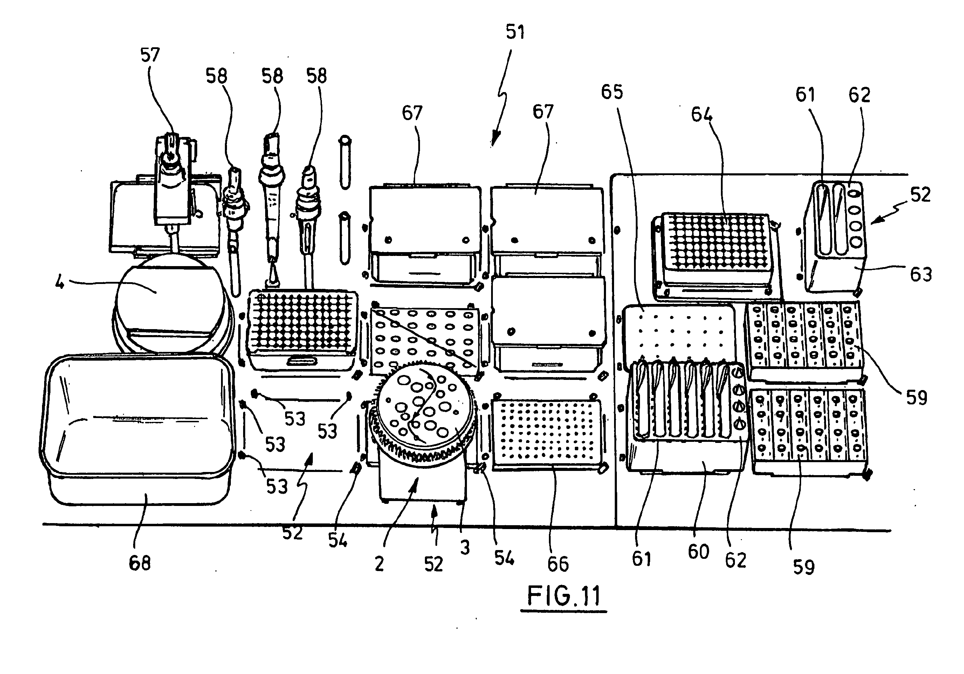

Gemäß Fig. 11 sind auf einer Arbeitsfläche 51 eines Laborautomaten mehrere Arbeitsplätze 52 für Mikrotiterplatten gemäß SBS-Standard vorhanden. Jeder Arbeitsplatz 52 ist begrenzt durch vier fest mit der Arbeitsfläche verbundene Stifte 53 und einen beweglichen Stift 54.

Jeder Arbeitsplatz 52 weist neben einer Ecke zwei fest mit der Arbeitsfläche 51 verbundene Stifte 53 auf und an einer diametral gegenüberliegenden Ecke einen beweglichen Stift 54 auf, der in Richtung auf die Stifte 53 mittels einer Feder belastete ist und entgegen der Wirkung der Feder von den Stiften 53 wegverlagerbar ist. Neben den beiden weiteren Ecken jedes Arbeitsplatzes 52 ist jeweils ein weiterer Stift 53 angeordnet, der fest mit der Arbeitsfläche 51 verbunden ist. Zusätzlich weist die Arbeitsfläche 51 einen weiteren Arbeitsplatz 55 auf, der eine entsprechende Anordnung von fest angeordneten Stiften 53 und beweglichen Stiften 54 aufweist, jedoch nur einen Bruchteil der Fläche eines Arbeitsplatzes 52 für eine Mikrotiterplatte gemäß SBS-Standard aufweist.

Auf einem Arbeitsplatz 52 ist ein Halter 2 mit einem darauf aufgesetzten Träger 3 der erfindungsgemäßen Vorrichtung zum Positionieren 1 angeordnet. Der Halter 2 ist mittels eines Adapters 5 zwischen den Stiften 53, 54 gehalten. Die Vorrichtung zum Positionieren 1 ist auf einem gekühlten Arbeitsplatz 52 des Laborautomaten angeordnet, um die Reagenzien zu kühlen.

Eine Abdeckung 4 ist auf einer Parkposition 56 der Arbeitsfläche 51 abgesetzt.

Auf weiteren Parkpositionen sind ein Greifer 57 und Pipettierwerkzeuge 58 einer Pipette des Laborautomaten abgesetzt.

Auf weiteren Arbeitsplätzen befinden sich Gestelle 59 für Gefäße mit aufzureinigenden Proben.

Auf einem weiteren Arbeitsplatz 52 ist ein Gefäßhalter 60 positioniert, der verschiedene Wannen 61 und Einsätze 62 zur Aufnahme von Gefäßen für Reagenzien enthält. Ein entsprechend aufgebauter, kleiner Gefäßhalter 63 ist auf dem weiteren Arbeitsplatz 52 positioniert.

Ferner ist auf einem Arbeitsplatz 52 ein Reaktionsgefäß 64 mit einer Vielzahl Aufnahmen zum Aufsetzen auf einem Thermomischer angeordnet.

Zudem ist auf einem Arbeitsplatz 52 ein Spezialgefäß 65 mit einer Vielzahl von Aufnahmen für eine magnetische Trennung von Magnetpartikeln mit angelagerter Nukleinsäure von Reagenzien vorhanden.

Die zuvor beschriebenen Einrichtungen 59 bis 65 dienen der Aufreinigung von Nukleinsäure. Die aufgereinigte Nukleinsäure wird vom Laborautomaten in eine Mikrotiterplatte 66 pipettiert, die auf einem weiteren Arbeitsplatz 52 neben der Vorrichtung zum Positionieren 1 von Gefäßen 11 angeordnet ist.

Im mittleren Bereich der Arbeitsfläche sind in der Nähe der Vorrichtung zum Positionieren 1 Pipettenspitzenhalter 67 angeordnet, in denen Pipettenspitzen bereitgestellt werden, die insbesondere für das Zusammenpipettieren von Proben und Reagenzien in der kreisringförmigen Gefäßkette 6 verwendet werden.

Verbrauchte Pipettenspitzen können von der Pipette in einen Abfallbehälter 68 abgeworfen werden, der auf einer weiteren Position der Arbeitsfläche 51 angeordnet ist.

Nach dem Zusammenpipettieren von Proben und Lösungen in der kreisringförmigen Gefäßkette 6 werden die Einzelgefäße 11 aus den Löchern 32 und weiteren Aufnahmen 21 entnommen. Die Vorrichtung zum Positionieren 1 wird in einem Versiegelungsgerät positioniert, um die kreisringförmige Gefäßkette 6 zu versiegeln. Danach wird die kreisringförmige Gefäßkette 6 in einen Thermocycler eingesetzt, um die PCR durchzuführen.

### Bezugszeichenliste:

- 1: Vorrichtung zum Positionieren
- 2: Halter
- 3, 3.1, 3.2, 3.3: Träger
- 4: Abdeckung
- 5: Adapter
- 6: kreisförmige Gefäßkette
- 7: Kettengefäß
- 8: Verbindungselement
- 9: Kettengefäßöffnung
- 10: innerer Vorsprung
- 11: Einzelgefäß
- 12: Einzelgefäßöffnung
- 13: umlaufender Vorsprung
- 14: Grundplatte
- 15: erstes Podest
- 16: zweites Podest
- 17: Stufe
- 18: Aufnahme
- 19: Nut
- 20: Bereich
- 21: weitere Aufnahmen
- 22: hochstehender Vorsprung
- 23: Aussparung
- 24: weitere Aussparung
- 25: weitere Nut
- 26: Rippe
- 27, 28: Sockel
- 29, 30: Mittel zum Verbinden
- 31: Halteplatte
- 32: Loch
- 33: Kennzeichnung
- 34: Farbkennzeichnung
- 35: alphanumerische Kennzeichnung
- 36: Trennungslinie
- 37: Fuß
- 38: Griffelement
- 39: äußerer Vorsprung
- 40, 41: Trennungsachse
- 42: Seitenwand
- 43: Deckwand
- 44: seitlicher Deckwandabschnitt
- 45: mittlerer Deckwandabschnitt
- 46: Flanke
- 47: untere Aussparung
- 48: Adapterplatte
- 49, 50: weitere Mittel zum Verbinden
- 51: Arbeitsfläche
- 52: Arbeitsplatz
- 53: Stift
- 54: beweglicher Stift
- 55: weiterer Arbeitsplatz
- 56: Parkposition
- 57: Greifer
- 58: Pipettierwerkzeug
- 59: Gestelle
- 60: Gefäßhalter
- 61: Wanne
- 62: Einsatz
- 63: kleiner Gefäßhalter
- 64: Reaktionsgefäß
- 65: Spezialgefäß
- 66: Mikrotiterplatte
- 67: Pipettenspitzenhalter
- 68: Abfallbehälter

## Patentansprüche

1. Vorrichtung zum Positionieren von Gefäßen mit
(a) einem Halter (2) für Gefäße (11) umfassend
- eine auf einer Kreislinie angeordnete Serie von Aufnahmen (18) für eine kreisringförmige Gefäßkette (6),
- einen innerhalb der Serie von Aufnahmen angeordneten zentralen Bereich (20) mit weiteren Aufnahmen (21) für Reagenzien enthaltende Einzelgefäße (11),
- und Mittel zum Ausrichten (23) und mit
(b) einem Träger (3) für Einzelgefäße (11), der
- eine Halteplatte (31) in Form eines Kreisscheibe oder eines Teils einer Kreisscheibe hat, die Löcher (32) für Einzelgefäße (11) an bestimmten Positionen aufweist, und der
- wenigstens ein weiteres Mittel zum Ausrichten (39) des Trägers (3) auf die Mittel zum Ausrichten (23) des Halters (2) in einer bestimmten Stellung hat, wobei in dieser Stellung die Löcher (32) auf bestimmte weitere Aufnahmen (21) ausgerichtet sind, die übrigen weiteren Aufnahmen (21) durch die Halteplatte (31) abgedeckt sind und mit Reaktionsflüssigkeit befüllte Einzelgefäße (11) in die Löcher (31) und die darauf ausgerichteten weiteren Aufnahmen (21) einsetzbar sind.

2. Vorrichtung gemäß Anspruch 1, bei der die Mittel zum Ausrichten (23) des Halters (2) einen den Bereich (20) mit den weiteren Aufnahmen (21) kreisförmig umgebenden hochstehenden Vorsprung (22) aufweisen, der an mindestens einer bestimmten Position eine Aussparung (23) aufweist und bei der die weiteren Mittel zum Ausrichten (39) des Trägers (3) einen passgenau in die Aussparung (23) einsetzbaren, nach außen vorstehenden Vorsprung (39) am Rand der Halteplatte (31) aufweisen.

3. Vorrichtung nach Anspruch 1 oder 2, bei der die Serie von Aufnahmen (18) an einem ersten Podest (15) des Halters (2) ausgebildet ist und bei der der Bereich (20) mit den weiteren Aufnahmen (21) und die Mittel zum Ausrichten (23) an einem zweiten zylindrischen Podest (16) des Halters (2) ausgebildet sind, wobei dieses zweite Podest (16) auf dem ersten Podest (15) ausgebildet ist.

4. Vorrichtung nach einem der Ansprüche 1 bis 3, bei der die weiteren Aufnahmen (21) des Halters (2) auf konzentrischen Kreislinien angeordnet sind und die Löcher (32) des Trägers (3) ebenfalls auf konzentrische Kreislinien angeordnet sind.

5. Vorrichtung nach einem der Ansprüche 1 bis 4, bei der die weiteren Aufnahmen (21) des Halters (2) und die Löcher (32) des Trägers (3) auf jeweils drei konzentrischen Kreislinien angeordnet sind.

6. Vorrichtung nach einem der Ansprüche 1 bis 5, die eine abnehmbare Abdeckung (4) aufweist, welche die Aufnahmen (18) und die weiteren Aufnahmen (21) in einem Abstand überdeckt.

7. Vorrichtung nach Anspruch 6, bei der das erste Podest (15) am äußeren Umfang radial vorstehende Rippen (26) aufweist, die in auf die Rippen (26) abgestimmte untere Aussparungen (47) am unteren Rand der Abdeckung (4) eingreifen.

8. Vorrichtung gemäß einem der Ansprüche 1 bis 7, bei der der Halter (2) unten Positionierungsmittel (5) zum Positionieren auf mindestens einem Arbeitsplatz (52) eines Laborautomaten für Mikrotiterplatten gemäß dem SBS-Standard aufweist.

9. Vorrichtung gemäß Anspruch 8, wobei die Positionierungsmittel äußere Ränder einer Basis des Halters (2) sind, deren Abmessungen den Abmessungen mindestens eines Arbeitsplatzes (52) eines Laborautomaten für eine Mikrotiterplatte gemäß SBS-Standard entsprechen.

10. Vorrichtung gemäß Anspruch 9, bei der der Halter (2) einen die Aufnahmen (18) und die weiteren Aufnahmen (21) aufweisenden Grundkörper (14) und einen den Grundkörper (14) haltenden Adapter (5) mit den Positionierungsmitteln aufweist oder bei der der Halter (2) ein die Aufnahmen (18) und die weiteren Aufnahmen (21) aufweisender Grundkörper (14)ohne Adapter (5) ist.

11. Vorrichtung nach einem der Ansprüche 1 bis 10, bei dem die Halteplatte (31) des Trägers (3) auf der Oberseite neben jedem Loch (32) mindestens eine bestimmte Kennzeichnung (33) aufweist.

12. Vorrichtung nach einem der Ansprüche 1 bis 11, bei der von der Unterseite der Halteplatte (31) Füße (37) zum Aufsetzen des Trägers (3) auf einen Untergrund vorstehen, um die Halteplatte (31)in einem Abstand vom Untergrund abzustützen und/oder bei der von der Oberseite der Halteplatte ein Griffelement vorsteht.

13. Vorrichtung umfassend mehrere Träger (3) gemäß einem der Ansprüche 1 bis 12, wobei jeder Träger (3) eine spezifische bestimmte Anordnung der Löcher (32) in der Halteplatte (31) aufweist.

14. Verwendung einer Vorrichtung zum Positionieren von Gefäßen gemäß einem der Ansprüche 1 bis 13, bei der
- in die auf einer Kreislinie angeordneten Aufnahmen (18) des Halters (2) eine kreisringförmige Gefäßkette (6) eingesetzt wird
- in die Löcher (32) des Trägers (3) mit Reagenzien befüllte Einzelgefäße (11) eingesetzt werden, wobei in bestimmte Löcher (32) Einzelgefäße (11) eingesetzt werden, die bestimmte Reagenzien enthalten,
- der Träger (3) mit den enthaltenen Einzelgefäßen (11) in die weiteren Aufnahmen (21) des Halters (2) und mit den weiteren Mitteln zum Positionieren (39) auf die Mittel zum Positionieren (23) des Halters (2) ausgerichtet und in der korrekten Ausrichtung auf den Halter (2) aufgesetzt wird und
- Reagenzien aus bestimmten Einzelgefäßen (11) entnommen und in bestimmte Kettengefäße (7) der Gefäßkette (6) eingefüllt werden.

15. Verwendung nach Anspruch 14, bei der die Einzelgefäße (11) in Löcher (32) eingesetzt werden neben denen mindestens eine Kennzeichnung (33) vorhanden ist, die auf das Reagenz hinweist, das in dem jeweils einzusetzenden Einzelgefäß (11) enthalten ist.

16. Verwendung nach Anspruch 14 oder 15, bei der der Halter (2) auf der Arbeitsfläche (51) eines Laborautomaten positioniert wird.

17. Verwendung nach einem der Ansprüche 14 bis 16, bei der der Halter (2) auf einem Arbeitsplatz (52) eines Laborautomaten für Mikrotiterplatten gemäß dem SBS-Standard positioniert wird.

18. Verwendung nach Anspruch 16 oder 17, bei der die Reagenzien mittels einer Pipette des Laborautomaten aus den Einzelgefäßen (11) entnommen und/oder in die Kettengefäße (7) der kreisringförmigen Gefäßkette (6) hineinpipettiert werden.

19. Verwendung nach einem der Ansprüche 17 bis 18, bei der nach dem Vorbereiten der Ansätze in den einzelnen Kettengefäßen (7) der kreisringförmigen Gefäßkette (6) der Träger (3) mit den enthaltenen Einzelgefäßen (11) von dem Halter (2) abgenommen und der Träger (3) entleert wird.

20. Verwendung nach Anspruch 19, bei der die kreisringförmige Gefäßkette (6) nach dem Befüllen auf dem Halter (2) versiegelt wird.

## Claims

1. A device for positioning vessels, with
(a) a holder (2) for vessels (1), comprising
• a series of receptacles (18) arranged on a circular line, for a circular ring-shaped vessel chain (6),
• a central area (20), arranged within the series of receptacles, and having further receptacles (21) for single vessels (11) containing reagents,
• and means for aligning (23), and with
(b) a carrier (3) for single vessels (11), which
• comprises a holding plate (31) in the form of a circular disc or of a part of a circular disc, which has holes (32) for single vessels (11) at certain positions, and which
• has at least one further means (39) for aligning the carrier (3) to the means for aligning (23) the holder (2) in a certain position, wherein in this position, the holes (32) are aligned to certain further receptacles (21), the remaining further receptacles (21) are covered up by the holding plate, and single vessels (11) filled with reaction liquid can be inserted into the holes (31) and into the further receptacles (21) aligned thereto.

2. The device according to claim 1, wherein the means for aligning (23) the holder (2) have a protruding projection (22), circularly surrounding the area (20) with the further receptacles (21), which has a recess (23) on at least one certain position, and wherein the further means (39) for aligning the carrier (3) have a projection (39) on the edge of the holding plate (31) which can be matchedly inserted into the recess (23) and projects towards the outside.

3. A device according to claim 1 or 2, wherein the series of receptacles (18) is formed on a first platform (15) of the holder (2), and wherein the area (20) with the further receptacles (21) and the means (23) for aligning (23) are formed on a second cylindrical platform (16) of the holder (2), this second platform (16) being formed on the first platform (15).

4. A device according to any one of claims 1 to 3, wherein the further receptacles (21) of the holder (2) are arranged on concentric circular lines, and the holes (32) of the carrier (3) are also arranged on concentric circular lines.

5. A device according to any one of claims 1 to 4, wherein the further receptacles (21) of the holder (2) and the holes (32) of the carrier (3) are each arranged on three concentric circular lines at a time.

6. A device according to any one of claims 1 to 5, which comprises a detachable covering (4) which covers up the receptacles (18) and the further receptacles (21) in a distance.

7. The device according to claim 6, wherein the first platform (15) has radially projecting ribs (26) on the outer circumference, which engage into lower recesses (47) at the lower edge of the covering (4) that are matched to the ribs (26).

8. A device according to any one of claims 1 to 7, wherein at the bottom, the holder (2) has positioning means (5) for positioning it on at least one workstation (52) of a lab automat for microtiter plates according to the SBS standard.

9. The device according to claim 8, wherein the positioning means are outer edges of a base of the holder (2), whose dimensions correspond to the dimensions of at least one workstation (52) of a lab automat for microtiter plates according to the SBS standard.

10. The device according to claim 9, wherein the holder (2) has a base body (14) comprising the receptacles (18) and the further receptacles (21), and an adapter (5) which holds the base body (14) and has the positioning means, or wherein the holder (2) is a base body (14) comprising the receptacles (18) and the further receptacles (21), but without adapter (5).

11. A device according to any one of claims 1 to 10, wherein the holding plate (31) of the carrier (3) has at least one certain marking (33) on the top side near to each hole (32).

12. A device according to any one of claims 1 to 11, wherein feet (37) for putting the carrier (3) on a ground project from the bottom side of the holding plate (31), in order to support the holding plate (31) in a distance from the ground, and/or wherein a handle element projects from the upper side of the holding plate.

13. A device comprising several carriers (3) according to any one of claims 1 to 12, wherein each carrier (3) has a certain specific arrangement of the holes (32) in the holding plate (31).

14. Utilization of a device for positioning vessels according to any one of claims 1 to 13, wherein
• a circular ring-shaped vessel chain (6) is put into the receptacles (18) of the holder (2) arranged on a circular line,
• single vessels (11) filled with reagents are put into the holes (32) of the carrier (3), wherein single vessels (11) containing certain reagents are put into certain holes (32),
• the carrier (3) with the contained single vessels (11) is aligned to the further receptacles (21) of the holder (2), and with the further means for positioning (39) to the means (23) for positioning of the holder (2), and is put up onto the holder (2) in the correct position, and
• reagents are picked up from certain single vessels (11), and are filled in certain chain vessels (7) of the vessel chain (6).

15. The utilization according to claim 14, wherein the single vessels (11) are put into holes (32) next to which there is at least one marking (33) which gives a sign concerning the reagent which is contained in the respective single vessel (11) that is to be put in.

16. An utilization according to claim 14 or 15, wherein the holder (2) is positioned on the working surface (51) of a lab automat.

17. An utilization according to any one of claims 14 to 16, wherein the holder (2) is positioned on a workstation (52) of a lab automat for microtiter plates according to the SBS standard.

18. An utilization according to claim 16 or 17, wherein the reagents are withdrawn from the single vessels (11) by means of a pipette of the lab automat, and/or are pipetted into the chain vessels (7) of the circular ring-shaped vessel chain (6).

19. An utilization according to any one of claims 17 to 18, wherein after preparing the feed material in the single chain vessels (7) of the circular ring-shaped vessel chain (6), the carrier (3) with the contained single vessels (11) is detached from the holder (2), and the carrier (3) is emptied.

20. The utilization according to claim 19, wherein the circular ring-shaped vessel chain (6) is sealed on the holder (2) after having been filled.

## Revendications

1. Dispositif de positionnement de flacons, avec
(a) un cadre support (2) pour flacons (11), comportant
• une série de logements (18), arrangée dans une ligne circulaire, pour une chaine de flacons (6) en forme d'anneau de cercle,
• une région centrale (20), arrangée au-dedans de la série de logements, avec des autres logements (21) pour des flacons individuels (11) qui contiennent des réactifs,
• et des moyens d'alignement, et avec
(b) un porteur (3) pour flacons individuels (11), qui a
• une plaque de retenue (31) en forme d'un disque circulaire ou d'une part d'un disque circulaire qui comporte des trous pour flacons individuels (11) dans certains positions, et qui a
• au moins un autre moyen (39) pour aligner le porteur (3) sur les moyens (23) pour aligner le cadre support (2) dans une certaine position, les trous (32) étant alignés sur certains autres logements (21) dans cette position, les autres logements (21) restants étant recouvris par la plaque de retenue (31), et des flacons individuels (11) remplis avec liquide réactionnel étant insérables dans les trous (31) et les autres logements (21) alignés sur ceux-ci.

2. Dispositif selon la revendication 1, dans lequel les moyens (23) pour aligner le cadre support (2) comportent une saillie (22) montante qui entoure la région (20) avec les autres logements (21) de façon circulaire et a un évidement (23) dans au moins une certaine position, et dans les dispositif, les autres moyens (39) pour aligner le porteur (3) comportent une saillie (39) sur le bord de la plaque de retenue (31), projetant vers l'extérieur et insérable sur mesure dans l'évidement (23).

3. Dispositif selon la revendication 1 ou 2, dans lequel la série de logements (18) est formée sur une première estrade (15) du cadre support (2), et dans lequel la région (20) avec les autres logements (21) et les moyens (23) pour aligner sont formés sur une deuxième estrade (16) cylindrique du cadre support (2), cette deuxième estrade (16) étant formée sur la première estrade (15).

4. Dispositif selon l'une quelconque des revendications 1 à 3, dans lequel les autres logements (21) du cadre support (2) sont arrangés sur des lignes circulaires concentriques et les trous (32) du porteur (3) sont aussi arrangés sur des lignes circulaires concentriques.

5. Dispositif selon l'une quelconque des revendications 1 à 4, dans lequel les autres logements (21) du cadre support (2) et les trous (32) du porteur (3) sont respectivement arrangés sur trois lignes circulaires concentriques.

6. Dispositif selon l'une quelconque des revendications 1 à 5, qui comporte un couvercle (4) démontable, qui couvre les logements (18) et les autres logements (21) à une distance.

7. Dispositif selon la revendication 6, dans lequel la première estrade (15) a des nervures (26) faisant radialement saillie sur la circonférence extérieure, qui s'engrènent dans des évidements (47) concertés aux nervures (26) sur le bord inférieur du couvercle (4).

8. Dispositif selon l'une quelconque des revendications 1 à 7, dans lequel le cadre support (2) comporte des moyens de positionnement (5) en son bas, pour le positionner sur au moins un poste de travail (52) d' un automate de laboratoire pour des plaques de microtitration selon le standard SBS.

9. Dispositif selon la revendication 8, dans lequel les moyens de positionnement sont des bords extérieurs d'une base du cadre support (2), dont les dimensions correspondent aux dimensions d'au moins un poste de travail (52) d'un automate de laboratoire pour une plaque de microtitration selon le standard SBS.

10. Dispositif selon la revendication 9, dans lequel le cadre support (2) a un corps de base (14) qui comporte les logements (18) et les autres logements (21), et un adaptateur (5) avec les moyens de positionnement qui retient le corps de base (14), ou dans lequel le cadre support (2) est un corps de base (14) sans adaptateur qui comporte les logements (18) et les autres logements (21).

11. Dispositif selon l'une quelconque des revendications 1 à 10, dans lequel la plaque de retenue (31) du porteur (3) comporte sur son côté supérieur au moins un certain marquage (33) à côté de chaque trou (32).

12. Dispositif selon l'une quelconque des revendications 1 à 11, dans lequel des pieds (37) pour mettre le porteur (3) sur un sol font saillie du côté inférieur de la plaque de retenue (31) afin de supporter la plaque de retenue (31) à une distance du sol, et/ou dans lequel un élément de manette fait saillie du côté supérieur de la plaque de retenue.

13. Dispositif comportant plusieurs porteurs (3) selon l'une quelconque des revendications 1 à 12, chaque porteur (3) ayant un certain arrangement spécifique des trous (32) dans la plaque de retenue (31).

14. Utilisation d'un dispositif de positionnement de flacons selon l'une quelconque des revendications 1 à 13, dans laquelle
• une chaine de flacons (6) en forme d'anneau de cercle est mise en place dans les logements (18) du cadre support (2) arrangés dans une ligne circulaire,
• des flacons individuels (11) remplis avec réactifs sont mis en place dans les trous (32) du porteur (3), des flacons individuels (11) étant mis en place dans certains trous (32) qui contiennent certains réactifs,
• le porteur (3) avec les flacons individuels (11) y contenus est aligné aux autres logements (21) du cadre support (2) et par les autres moyens de positionnement (39) aux moyens de positionnement (23) du cadre support (2), et est remis sur le cadre support (2) dans l'alignement correct, et
• des réactifs sont enlevés de certains flacons individuels (11) et versés dans certains flacons de chaine (7) de la chaine de flacons (6).

15. Utilisation selon la revendication 14, dans laquelle les flacons individuels (11) sont insérés dans des trous (32) à côté desquels il y a au moins un marquage (33) qui indique le réactif qui est contenu dans le flacon individuel (11) correspondant qu'il faut insérer.

16. Utilisation selon la revendication 14 ou 15, dans laquelle le cadre support (2) est positionné sur la surface de travail (51) d'un automate de laboratoire.

17. Utilisation selon l'une quelconque des revendications 14 à 16, dans laquelle le cadre support (2) est positionné sur un poste de travail (52) d' un automate de laboratoire pour des plaques de microtitration selon le standard SBS.

18. Utilisation selon la revendication 16 ou 17, dans laquelle les réactifs sont prélevés des flacons individuels (11) moyennant une pipette de l'automate de laboratoire et/ou sont pipetés à l'intérieur des flacons de chaine (7) de la chaine de flacons (6) en forme d'anneau de cercle.

19. Utilisation selon l'une quelconque des revendications 17 à 18, dans laquelle après l'organisation des préparations dans les flacons de chaine individuels (7) de la chaine de flacons (6) en forme d'anneau de cercle, le porteur (3) avec les flacons individuels (11) y contenus est décroché du cadre support (2) et le porteur (3) est vidangé.

20. Utilisation selon la revendication 19, dans laquelle la chaine de flacons (6) en forme d'anneau de cercle est scellée sur le cadre support (2) après le remplissage.
